# EUROPÄISCHE PATENTSCHRIFT

(11) **EP 0 803 509 B1**
(45) Veröffentlichungstag und Bekanntmachung des Hinweises auf die Patenterteilung: **10.07.2002**
(21) Anmeldenummer: 97103182.8
(22) Anmeldetag: 27.02.1997
(51) Int. Cl.: C07F 9/6581, C08F 30/02, C08L 43/02, C07F 9/06

(54) **Polymerisierbares Phosphazenderivat, Verfahren zu dessen Herstellung und dessen Verwendung**
Polymerizable phosphazene derivatives, process for their preparation and their use
Dérivés polymérisables de phosphazènes, procédé pour leur préparation et leur utilisation

(30) Priorität: 27.04.1996 DE 19616968
(43) Veröffentlichungstag der Anmeldung: 29.10.1997
(73) Patentinhaber: DaimlerChrysler AG, 70567 Stuttgart (DE)
(72) Erfinder: Raith, Thomas, Dr., 73249 Wernau (DE); Nuding, Wolfgang, 89081 Ulm (DE)

(56) Entgegenhaltungen:
- EP-A- 0 307 861
- EP-A- 0 313 863
- EP-A- 0 557 943
- J. AM. CHEM. SOC. (JACSAT,00027863);91; VOL.113 (20); PP.7609-13, EHIME UNIV.;FAC. ENG.; MATSUYAMA; 790; JAPAN (JP), XP002034957 INOUE K ET AL: "High-conductivity electrolytes composed of polystyrene carrying pendant oligo(oxyethylene)cyclotriphosphazenes and lithium perchlorate"
- CHEMICAL ABSTRACTS, vol. 124, no. 1, 1.Januar 1996 Columbus, Ohio, US; abstract no. 008988, KUROV G N ET AL: "Functionalization of phosphazenes with 2-vinyloxyethanol" XP002034958 & ZH. ORG. KHIM. (ZORKAE,05147492);95; VOL.31 (1); PP.147-8, IRKUTSK. INST. ORG. KHIM.;IRKUTSK; RUSSIA (RU),
- CHEMICAL ABSTRACTS, vol. 125, no. 26, 23.Dezember 1996 Columbus, Ohio, US; abstract no. 331790, YOSHIDA T ET AL: "Phosphazene derivatives, resin compositions containing them, and their cured products" XP002034959 & JP 08 239 395 A (NIPPON KAYAKU KK;JAPAN) 17.September 1996

## Beschreibung

Gattungsgemäße Phosphazenderivate sind in der EP-A-0313 863 beschrieben. Dabei handelt es sich um hexasubstituierte Cyclotriphosphazene, wobei auch Styrol zu den Substituenten zählt. Diese Monomeren werden allerdings mit einem Bismaleimid als Comonomer polymerisiert.

Die EP-A-0 307 861 offenbart ferner beschichtete Formteile aus einem Harz, wobei die Beschichtung eine aushärtbare Phosphazenkomponente mit einem oder zwei Vinylresten pro Phosphoratom enthält.

Die EP-A-0 557 943 beschreibt durch radikalische Polymerisation aushärtbare Phosphazenverbindungen, deren Polymerisation durch Zugabe von Initiatoren oder durch Elektronenstrahlen gestartet wird. Die EP-A-0 368 165 beschreibt härtbare Harzzusammensetzungen, die eine härtbare Phosphazenverbindung und eine Pentaerythritolacrylatverbindung und/oder eine Bis-(4-acryloxydialkoxyphenyl)-alkanverbindung im Gemisch miteinander enthalten.

Weitere Phosphazenderivate sind in einem Artikel von Kenzo Inoue et al. "High-Conductivity Electrolytes Composed of Polystyrene Carrying Pendant Oligo(oxyethylene)cyclotriphosphazenes and Li-ClO₄", J.Am.Chem.Soc. 1991,113,7609-7613 beschrieben. Dabei handelt es sich ebenfalls um hexasubstituierte Cyclotriphosphazene mit lediglich einem Styrolrest pro Ring, die daher nicht als Monomer für aushärtbare Bindemittel geeignet sind.

In Chemical Abstracts, Vol.124, No.1, 1. Januar 1996 ist unter der Nummer 8988c ein Cyclotriphosphazen mit vier ungesättigten Substituenten beschrieben, bei welchem aber zwei Chloratome als Substituenten verbleiben.

Die bekannten Phosphazenderivate haben einen oder mehrere der folgenden Nachteile. Sie neigen zur vorzeitigen Polymerisation, so dass Stabilisatoren zugegeben werden müssen, was seinerseits Nachteile für die Lagerbeständigkeit und die Auswahl der Synthesebedingungen, Ausbeute und Chlorfreiheit zur Folge hat. Radikalische Polymerisation wird durch Luftsauerstoff inhibiert, und besonders die thermische Aushärtung führt häufig zu unvollständig ausgehärteten Produkten, die sich mit der Zeit verfärben. Bei der Aushärtung tritt häufig eine starke Schrumpfung ein, die zur Haftungsverschlechterung und Rissbildung führt, so dass solche Phosphazenderivate oder Gemische derselben nach dem Stand der Technik für viele Anwendungszwecke, wie insbesondere als Bindemittel für Lacke oder Beschichtungsmittel nicht brauchbar sind.

Die der Erfindung zugrunde liegende Aufgabe bestand nun darin, neue polymerisierbare Phosphazenderivate zu bekommen, die diese aufgezeigten Nachteile des Standes der Technik vermeiden und polymerisierte Produkte mit verbesserten Eigenschaften ergeben. Insbesondere ist es erwünscht, bei der Polymerisation der Phosphazenderivate einen radikalischen Mechanismus zu vermeiden.

Diese Aufgabe wird mit polymerisierbaren Phosphazenderivaten mit einem Grundgerüst der allgemeinen Formel

-[NP(Z-Q-O-(C₆H₄)_{y}-CR'=CHR'')ₐ(Z'-YH)_{b}]ₓ- (1)

gelöst, worin Z und Z' gleich oder verschieden sind und jeweils -O-, -S-, -NH- oder -NR- (R = C₁-C₆-Alkyl) bedeuten, Q eine gegebenenfalls O, S und/oder N enthaltende aliphatische, cycloaliphatische, aromatische und/oder heterocyclische Kohlenwasserstoffgruppe bedeutet, R' und/oder R'' Wasserstoff oder C₁-C₁₀-Alkyl bedeuten, YH eine gegebenenfalls 0, S und/oder N und/oder gegebenenfalls eine von einer Vinylethergruppe oder Styrolethergruppe verschiedene reaktive Gruppe enthaltende aliphatische, cycloaliphatische, aromatische und/oder heterocyclische Kohlenwasserstoffgruppe bedeutet, y 0 oder 1 ist, x eine ganze Zahl von 2 bis 20 bedeutet und a eine Zahl größer als 0 ist, b=0 oder eine Zahl größer als Null ist, wobei a + b = 2 ist.

Die offenen Bindungen der obigen Formel sind entweder zu einem Ring mit abwechselnden N- und P-Atomen zusammengefügt oder an Gruppen A oder B oder übliche Katalysator- oder Startermolekülgruppen gebunden. Letztere lassen sich beispielsweise "Makromol.Chem." 183 (1982), Seiten 1843 bis 1854 und 1833 bis 1841 entnehmen, wie solche von Lewis-Säuren, SbCl₃, AlCl₃ oder Schwefelverbindungen.

Die erfindungsgemäßen Phosphazenderivate können in einem Molekül zwei oder mehrere verschiedene Vinylethergruppen und/oder sowohl Vinylethergruppen als auch Styrolethergruppen enthalten.

Mit diesen erfindungsgemäßen Phosphazenderivaten, die wenigstens im Falle der Substitution durch Vinylethergruppen kationisch polymerisierbar sind und deren Polymerisation durch Säuren gestartet werden kann, haben gegenüber bekannten Phosphazenderivaten einen oder mehrere der folgenden Vorteile:

In hohen Ausbeuten kann man eine vollständige Substitution des Phosphazens und damit Chlorfreiheit bekommen. Die Aushärtung der erfindungsgemäßen Phosphazenderivate wird nicht durch Sauerstoff inhibiert, selbst dünne Beschichtungen werden in Gegenwart von Luftsauerstoff vollständig ausgehärtet, was insbesondere die thermisch initiierte Aushärtung ermöglicht. Sie besitzen keine oder wenigstens verminderte Neigung zu Verfärbungen der polymerisierten Produkte. Sie sind gewöhnlich weniger viskos und daher besser für lösungsmittelarme Applikation geeignet. Sie neigen weniger zur Schrumpfung.

Alle diese Eigenschaften machen die erfindungsgemäßen polymerisierbaren Phosphazenderivate als aushärtbare Bindemittel für Lacke, Beschichtungsmittel, Füllmittel, Spachtelmassen, Klebstoffe, Formteile oder Folien, insbesondere als Bindemittel für Lacke und Beschichtungsmittel geeignet.

Sie können beispielsweise mit Vorteil als Bindemittel in Klarlacken für die Außenlackierung oder für die Lackierung auf Holzinnenteilen in Fahrzeugen, in Klarlacken für Scheinwerfer-Streulichtscheiben aus Polycarbonat oder dergleichen eingesetzt werden.

Den sie enthaltenden Formulierungen können übliche Zusatzstoffe, wie Initiatoren, Pigmente, Verlaufshilfsmittel, Farbstoffe, UV-Stabilisatoren, Füllstoffe oder dergleichen zugesetzt werden.

Die oben angegebene Formel der erfindungsgemäßen Phosphazenderivate besagt, dass diese an den Phosphoratomen zwingend wenigstens teilweise durch Gruppen substituiert sind, die wenigstens eine Vinylethergruppe und/oder Styrolethergruppe der angegebenen Formeln enthalten. Der Substituent Z'-YH kann also, muss aber nicht in dem Phosphazenmolekül vorhanden sein.

Die erfindungsgemäßen Phosphazenderivate können Ringverbindungen oder kettenförmige Verbindungen sein, die jedenfalls ein Grundgerüst mit abwechselnden Stickstoff- und Phosphoratomen besitzen. Bevorzugt sind die Ringverbindungen, in denen x = 3 oder 4 ist und die damit aus einem Sechsring oder Achtring bestehen. Besonders bevorzugt ist der Sechsring, in de x = 3 ist.

Q ist eine Spacer-Gruppe, die über ein Sauerstoffatom, ein Schwefelatom, eine NH-Gruppe oder NR-Gruppe an ein Phosphoratom gebunden ist und an ihrem freien Ende und/oder als Seitengruppe wenigstens eine Vinylethergruppe und/oder Styrolethergruppe besitzt, in welcher R' und R'' die obige Bedeutung haben. Vorzugs weise sind in diesen Gruppen R' und/oder R'' Wasserstoff, Methyl oder Ethyl, besonders bevorzugt Wasserstoff. R ist Alkyl mit 1 bis 6 Kohlenstoffatomen, vorzugsweise Methyl oder Ethyl. Z und Z' sind bevorzugt -O-.

Die Spacer-Gruppen Q sowie die Gruppen YH können so aufgebaut sein, dass sie die Eigenschaften des Phosphazenderivates steuern. Diese Gruppen Q und YH können sehr unterschiedlichen Aufbau haben. Beispiele solcher Gruppen Q und Y lassen sich der DE-A-4 325 776 entnehmen. Gewöhnlich handelt es sich bei ihnen um Alkylengruppen unterschiedlicher Kettenlänge, geradkettig oder verzweigtkettig, vorzugsweise mit 2 bis 20, besonders 2 bis 6 Kohlenstoffatomen, Biphenylen-, Phenylen- oder Oxyalkylengruppen oder Kombinationen hiervon. Im Falle der Oxyalkylengruppen handelt es sich bevorzugt um Oxyethylengruppen der Formel -(CH₂-CH₂-O)ₙ-, worin n 1 bis 20, vorzugsweise 1 bis 6 ist. Die Spacer-Gruppen Q und Y können an diesem bevorzugten Grundgerüst gegebenenfalls Substituenten enthalten oder durch andere Gruppen unterbrochen sein. Solche Substituenten sind beispielsweise Estergruppen, Ketogruppen, OH-Gruppen oder NH₂-Gruppen. In die Alkylenkette oder Oxyalkylenkette eingeschobene Gruppen sind beispielsweise wiederum Estergruppen, Ketogruppen, Urethangruppen oder NH-Gruppen.

Die Gruppe YH kann geradkettig oder verzweigt sein und aus einer reaktiven oder nichtreaktiven Gruppe bestehen oder eine solche enthalten, die von den Vinylether- und Styrolethergruppen der obigen Formeln verschieden ist. Bevorzugte reaktive Gruppen YH sind oder enthalten Isocyanatgruppen, Carboxylgruppen, Allylgru pen, Vinylacetatgruppen, N-Methylolgruppen, Epoxidgruppen, Glycidylethergruppen, Acrylatgruppen, Methacrylatgruppen, Silylgruppen (wie C₁-C₆-Alkoxysilyl- oder Acetoxysilylgruppen), OH-Gruppen oder NH₂-Gruppen. Die reaktiven Gruppen können auch in üblicher Weise blockiert sein. Der Gegenstand der Erfindung soll aber nicht auf die obige Aufzählung der Gruppen YH beschränkt sein.

Die bevorzugten Phosphanzenderivate nach der Erfindung sind solche, in denen y = O ist, d.h. die Vinyletherderivate sind. Diese sind auf jeden Fall unter kationischem Starten mit Hilfe wenigstens einer Säure aushärtbar. Dies kann durch direkte Zugabe von Säuren geschehen. Stattdessen können der Formulierung Initiatoren zugegeben werden, die bei der Bestrahlung mit UV-Licht, Elektronenstrahlung oder durch Temperaturerhöhung Säuren abspalten, die ihrerseits dann die Polymerisation starten. Sind zusätzlich zu den Vinylethergruppen weitere reaktive Gruppen im Molekül enthalten, so können Multi-Cure-Verfahren eingesetzt werden, wie beispielsweise nebeneinander UV-Härtung, thermische Härtung, durch Luftfeuchtigkeit oder durch Sauerstoff.

Die Styrolethergruppen enthaltenden Phosphazenderivate nach der Erfindung werden gewöhnlich in üblicher Weise radikalisch polymerisiert, wozu den Formulierungen gegebenenfalls entweder Initiatoren zugegeben werden, die bei der Bestrahlung mit UV-Licht oder auf andere Weise Radikale abspalten, oder ohne Initiatorzugabe Radikale durch Zufuhr thermischer Energie oder von Elektronenstrahlen erzeugt werden. In bestimmten Fällen ist auch anionische oder kationische Polymerisation möglich.

Die erfindungsgemäßen Phosphazenderivate lassen sich herstellen, indem man ein Chlorphosphazen mit wenigstens einer Verbindung der allgemeinen Formel M-Z-Q-O-(C₆H₄)_{y}-CR'=CHR'' allein oder in Kombination mit wenigstens einer Verbindung der allgemeinen Formel M-Z'-YH oder nacheinander mit M-Z-Q-O-(C₆H₄)_{y}-CR'=CHR'' und M-Z'-YH in einem inerten Lösemittel umsetzt, wobei M ein Wasserstoffatom, Alkalimetall, Erdalkalimetall oder einen Basenrest bedeutet und Z, Z', Q, R', R'' und y wie oben definiert sind. Der Basenrest M kann beispielsweise ein Pyridylrest oder Tertiäraminorest, wie Triethylaminorest, oder der Rest von 1,8-Diazabicyclo-(5,4,0)-undec-7-en(1,5-5) sein. Bevorzugt ist M Natrium. Die Verbindungen M-Z-Q-O-(C₆H₄)_{y}-CR'=CHR'' und M-Z'-YH können durch Umsetzung von Verbindungen H-Z-Q-O-(C₆H₄)_{y}-CR'=CHR'' und H-Z'-YH mit Natriumhydrid, Natriummetall oder Natriumhydroxid erhalten werden, wie beispielsweise gemäß dem Verfahren der US-A-4 775 732.

Das bevorzugte Verfahren zur Herstellung der Phosphazenderivate nach der Erfindung besteht darin, daß man Verbindungen einsetzt, in denen M an ein Sauerstoffatom gebunden ist und somit in der obigen Formel die Bedeutung von Z bzw. Z'-O- ist.

Als inertes Lösemittel, in welchem die Umsetzung durchgeführt wird, kommen beispielsweise Tetrahydrofuran, Toluol, Dimethylsulfoxid, Dimethylformamid, Chloroform, Methylenchlorid oder Pyridin in Betracht.

Die Reaktionstemperatur liegt zweckmäßig zwischen 15 und 110 °C, vorzugsweise zwischen 18 und 70 °C, wobei niedrigere Temperaturen längere Reaktionszeiten erfordern. Die Reaktionszeiten liegen günstigerweise, je nach der gewählten Temperatur, zwischen 5 und 60 h.

Durch die folgenden Beispiele wird die Erfindung weiter erläutert.

### Beispiel 1

### 2,2,4,4,6,6-Hexakis-(vinyloxyethylenoxy)-2,2,4,4,6,6-hexahydro-1,3,5,2,4,6-triazatriphosphorin

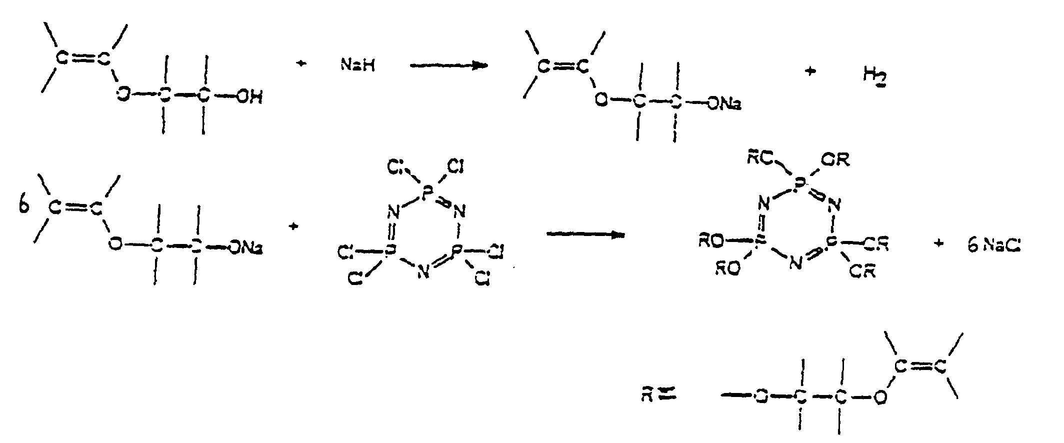

In einem 2I-Drehalskolben mit Innenthermometer, Tropftrichter und Rückflußkühler suspendiert man unter Argon 16,80 g (0,10 mol) Natriumhydrid (95 %ig) in 700 ml wasserfreiem THF.

Anschließend gibt man langsam während 90 min unter Eisbadkühlung über einen Tropftrichter 61,67 g (0,70 mol) Ethylenglykolvinylether zu. Die Innentemperatur erhöht sich dabei leicht. bleibt aber unter 20 °C. Anschließend wird bei Raumtemperatur insgesamt 48 h lang (alternativ 20 h bei etwa 50 °C) gerührt. Dabei tritt allmählich eine Braunfärbung des Kolbeninhalts ein.

Danach gibt man über einen Tropftrichter langsam (90 min) eine Lösung aus 34,79 g (0,10 mol) Phosphonitrilchlorid (NPCl₂)₃ in 200 ml wasserfreiem THF zu. Bei dieser Zugabe muß mit einem Wasserbad gekühlt werden, um die Temperatur unter 30 °C zu halten. Man rührt noch 1 h bei Raumtemperatur und erwärmt den Ansatz dann auf 50 °C Innentemperatur. Bei dieser Temperatur rührt man über Nacht (insgesamt 24 h).

Danach läßt man auf Raumtemperatur abkühlen und saugt ab. Das braune Filtrat wird im Rotationsverdampfer nahezu vollständig von THF befreit, mit 250 ml Diethylether und 250 ml demineralisiertem Wasser versetzt und in einen Scheidetrichter überführt. Man trennt die Etherphase ab und extrahiert die wäßrige Phase noch zweimal mit je 125 ml Diethylether. Die vereinigten Etherphasen werden noch dreimal mit je 50 ml demineralisiertem Wasser geschüttelt, wodurch nochmals eine merkliche Aufhellung erzielt werden kann. Man trennt die etherische Phase ab und trocknet über Natriumsulfat. Nach dem Abfiltrieren vom Trocknungsmittel und Einrotieren der Lösung erhält man 62,84 g (0,096 mol entsprechend 96 % der Theorie) einer gelben, klaren Flüssigkeit.

Zur weiteren Reinigung kann man das Rohprodukt mit Diethylether und Aktivkohle rühren, anschließend über eine kurze Kieselgelsäule (Kieselgel 60, Laufmittel Diethylether) filtrieren und danach einrotieren. Das Produkt ist anschließend DC- und HPLC-rein. Ausbeute nach der Reinigung: 60,23 g (0,092 mol entsprechend 92 % der Theorie).

Das gereinigte Produkt kristallisiert nach Anreiben mit einem Glasstab (Kristallkeimbildung) aus
Das Phosphonitrilchlorid wurde aus n-Heptan umkristallisiert. Der Vinylether wurde nicht zusätzlich gereinigt. Das Tetrahydrofuran wurde über Molekularsieb Deperox gelagert und ist wasserfrei. Die sonstigen Chemikalien werden ohne zusätzliche Aufreinigung verwendet.

Eigenschaften des Produktes:
weißer klebriger Feststoff; Schmelzpunkt: 26 - 27 °C, über 230 °C allmählich Braunfärbung (ohne Polymerisation); Brechungsindex (der nichtkristallisierten Flüssigkeit): n_{d}²⁵ = 1,4914.

| Elementaranalyse | N % | P % | C % | H % | Cl % | 0 % |
|---|---|---|---|---|---|---|
| berechnet | 6,39 | 14,13 | 43,84 | 6,44 | 0,00 | 29,20 |
| gefunden | 6,20 | 14,29 | 44,07 | 6,54 | 0,00 | |

Molmasse: 657,53 g/mol; gutlöslich in Chloroform, Tetrahydrofuran, Diethylether, Isopropanol, Ethylacetat, Toluol, schlecht löslich in n-Heptan, n-Pentan; dünnschichtchromatographische Untersuchung: Laufmittelsystem n-Heptan zu Ethylacetat 1 : 1, Material Kieselgel mit UV-Indikator Fa. Roth Rf = 0,40; Detektion: UV 254 nm, Indikator Methylrot, Jod, Beilsteinprobe auf Halogene negativ.

### Beispiel 2

### 2,2,4,4,6,6-Hexakis-(vinyloxyhexyloxy)-2,2,4,4,6,6-hexahydro-1,3,5,2,4,6-triazatriphosphorin

Nach dem in Beispiel 1 beschriebenen Verfahren wird die in der Überschrift genannte Verbindung aus 14,42 g (0,10 mol) 1,6-Hexandioldivinylether, 2,40 g (0,10 mol) Natriumhydrid und 4,29 g (0,012 mol) (NPCl₂)₃ hergestellt.

Eigenschaften:
klare, viskose, schwach gelb gefärbte Flüssigkeit; Ausbeute: 10,64 g (0,011 mol entsprechend 89 % der Theorie); Molmasse: 993,57 g/mol; Brechungsindex: n_{d}²⁵ = 1,4804; Beilsteinprobe auf Halogene negativ; dünnschichtchromatographische Untersuchung: Laufmittel Ethylacetat, Material Kieselgel mit UV-Indikator Fa. Roth Rf = 0,27; Detektion: UV 254 nm, Indikator Methylrot, Jod.

### Beispiel 3

### 2,2,4,4,6,6-Hexakis-(vinyloxybutyloxy)-2,2,4,4 ,6,6-hexahydro-1,3,5,2,4,6-triazatriphosphorin

Diese Verbindung wird nach dem in Beispiel 1 beschriebenen Verfahren aus 11,62 g (0,10 mol) 1,4-Butandioldivinylether, 2,40 g (0,10 mol) Natriumhydrid und 4,97 g (0,014 mol) (NPCl₂)₃ hergestellt.

Eigenschaften:
klare, viskose, schwach gelb gefärbte Flüssigkeit; Ausbeute: 7,60 g (0,009 mol entsprechend 67 % der Theorie); Molmasse: 825,39 g/mol; Brechungsindex: n_{d}²⁵ = 1,4815; Beilsteinprobe auf Halogene negativ; dünnschichtchromatographische Untersuchung: Laufmittelsystem n-Heptan zu Ethylacetat 1 : 1; Material Kieselgel mit UV-Indikator Fa. Roth Rf = 0,55; Detektion: UV 254 nm, Indikator Methylrot, Jod.

### Beispiel 4

### 2,2,4,4,6,6-Hexakis-[vinyloxydi-(ethylenoxy)]-2,2,4,4,6,6-hexahydro-1,3,5,2,4,6-triazatriphosphorin

Diese Verbindung wird wie in Beispiel 1 mit etwas längerer Reaktionszeit aus 13,22 g (0,10 mol) Diethylenglykolvinylether, 2,40 g (0,10 mol) Natriumhydrid und 4,97 g (0,014 mol) (NPCl₂)₃ hergestellt.

Eigenschaften:
klare, viskose, schwach gelb gefärbte Flüssigkeit; Ausbeute: 9,68 g (0,011 mol entsprechend 75 % der Theorie); Molmasse: 921,36 g/mol; Beilsteinprobe auf Halogene negativ; dünnschichtchromatographische Untersuchung: Laufmittel Ethylacetat; Material Kieselgel mit UV-Indikator Fa. Roth Rf = 0,70; Detektion: UV 254 nm, Indikator Methylrot, Jod; gut löslich in Dichlormethan, Chloroform, Tetrahydrofuran; schlecht löslich in Wasser, n-Heptan.

### Beispiel 5

### 2,2,4,4,6,6-Hexakis-(3'-vinyloxypropylamino)-2,2,4,4,6,6-hexahydro-1,3,5,2,4,6-triazatriphosphorin

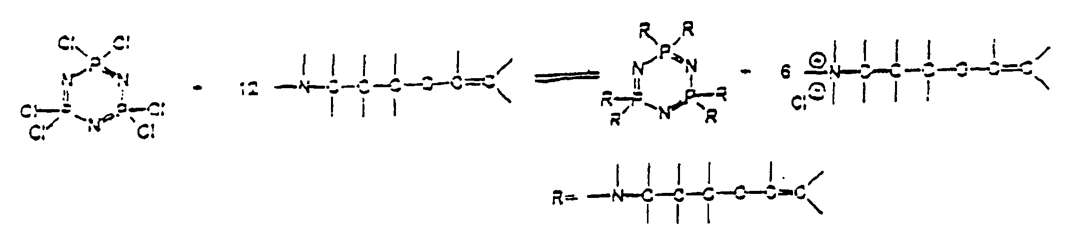

In einen 259 ml-Dreihalskolben mit Topftrichter, Rückflußkühler und Innenthermometer gibt man 20,23 g (0,20 mol) 3-Amino-1-propanolvinylether und versetzt mit 50 ml wasserfreiem Toluol. Anschließend setzt man unter Kühlung mit einem Wasserbad innerhalb 20 min eine Lösung aus 4,97 g (0,014 mol) (NPCl₂)₃ in 50 ml wasserfreiem Toluol zu. Die Innentemperatur steigt leicht an. Nach ungefähr der Hälfte der Zugabe erfolgt die Bildung eines weißen Hydrochloridniederschlages. Man rührt noch 150 min bei Raumtemperatur und erwärmt dann auf 50 °C Innentemperatur. Bei dieser Temperatur rührt man 18 h und läßt anschließend auf Raumtemperatur kommen. Man saugt ab, schüttelt das Filtrat mit 15 ml demineralisiertem Wasser, trocknet über wasserfreiem Natriumsulfat, filtriert und zieht danach das Lösungsmittel der erhaltenen organischen Phase am Rotationsverdampfer ab. Nach kurzem Trocknen im Hochvakuum erhält man 12,21 g einer orangefarbenen, hochviskosen, klaren Flüssigkeit.

Man nimmt mit Toluol auf und filtriert über eine kurze Kieselgelsäule (Kieselgel 60); Ausbeute nach dem Entfernen des Lösungsmittels und Trocknung im Hochvakuum: 9,70 g (0,013 mol entsprechend 94 % der Theorie) klare, gelbe, hochviskose Flüssigkeit.

Eigenschaften:
Molmasse: 735,78 g/mol; dünnschichtchromatographische Untersuchung: Laufmittel Ethylacetat, Material Kieselgel mit UV-Initiator Fa. Roth Rf = 0,80; Detektion: Indikator Methylrot, Jod.

### Beispiel 6

### Gemischtsubstituiertes Vinyletherphosphazenderivat

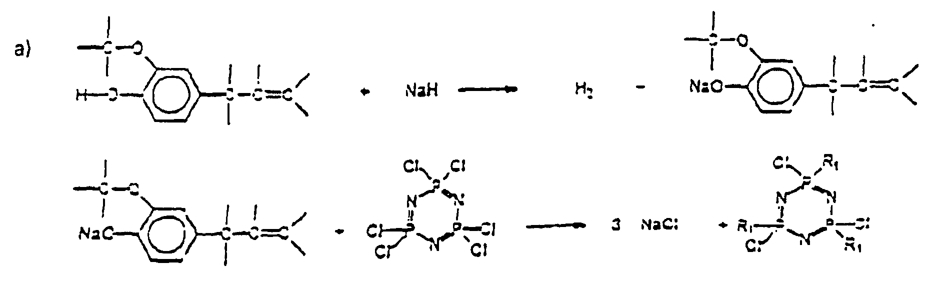

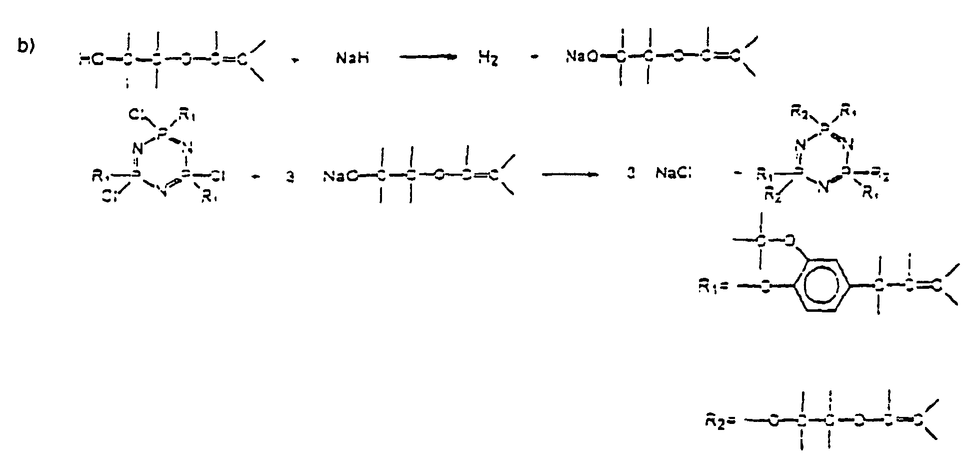

a) In einen 1000 ml-Dreihalskolben mit KPG-Rührwerk, Tropftrichter und Innenthermometer gibt man 9,60 g (0,40 mol) Natriumhydrid und schlämmt mit 100 ml wasserfreiem Tetrahydrofuran auf. Anschließend gibt man unter Kühlung mit Eis/Kochsalz eine Lösung aus 65,68 g (0,40 mol) Eugenol in 50 ml wasserfreiem Tetrahydrofuran zu (Gasentwicklung, Zutropfdauer 45 min). Man rührt noch 1 h bei Raumtemperatur und tropft dann ebenfalls unter Kühlung mit Eis/Kochsalz eine Lösung aus 46,35 g (0,133 mol) (NPCl₂)₃ in 150 ml wasserfreiem Tetrahydrofuran zu (Zutropfdauer 15 min, geleeartige Niederschlagsbildung von NaCI, graugrüner Kolbeninhalt).
Man rührt 60 h bei Raumtemperatur, überführt in einen Einhalskolben und rotiert das Lösungsmittel ab. Man nimmt mit 150 ml Diethylether und 150 ml demineralisiertem Wasser auf und trennt die Phasen im Scheidetrichter. Die wäßrige Phase wird noch zweimal mit je 10 ml demineralisiertem Wasser gewaschen. Die vereinigten orangefarbenen Etherphasen werden über wasserfreiem Natriumsulfat getrocknet. Man filtriert vom Trocknungsmittel und rührt das klare Filtrat 30 min bei Raumtemperatur mit Aktivkohie. Nach abermaligem Filtrieren und Einrotieren erhält man 94,94 g (0,130 mol entsprechend 98 % der Theorie) einer viskosen, klaren, braungefärbten Flüssigkeit.
Zur Reinigung filtriert man über eine kurze Kieselgelsäule (Kieselgel 60, Laufmittel n-Heptan zu Ethylacetat 1 : 1). Man rotiert ab und trocknet an der Ölpumpe. Ausbeute: 87,62 g (0,120 mol entsprechend 90 % der Theorie) hochviskose, hellgelbe, klare Flüssigkeit.
Eigenschaften des Zwischenproduktes:
Molmasse: 730,89 g/mol; Beisteinprobe auf Halogen positiv; Brechungsindex: n_{d}²⁰ = 1,5723; gut löslich in Toluol, Chloroform, Ethylacetat, Diethylether, Tetrahydrofuran, Aceton; schlecht löslich in Waser, n-Heptan; das Produkt besteht aus isomeren Verbindungen.

| Elementaranalyse | C % | H % | N % | O % | Cl % | P % |
|---|---|---|---|---|---|---|
| berechnet | 49,38 | 4,56 | 5,76 | 13,16 | 13,39 | 12,75 |
| gefunden | 49,63 | 4,66 | 5,61 | | 14,61 | 12,81 |

dünnschichtchromatische Untersuchung: Laufmittel Ethylacetat; Material Kieselgel mit UV-Indikator Fa. Roth Rf = 0,71; Detektion: UV 254 nm, Indikator Methylrot, Jod.
b) In einen 250 ml-Dreihalskolben mit Tropftrichter, Rückflußkühfer und Innenthermometer gibt man 4,46 g (0,144 mol) Natriumhydrid und schlämmt mit 100 ml wasserfreiem Tetrahydrofuran auf. Man rührt 5 min und gibt dann unter Kühlung mit einem Wasserbad innerhalb 30 min eine Lösung von 12,69 g (0,144 mol) Ethylenglykolvinylether in 20 ml wasserfreiem Tetrahydrofuran zu. Anschließend erwärmt man auf 50 °C Innentemperatur und rührt 40 h. Der Kolbeninhalt wird danach auf Raumtemperatur abgekühlt.
Unter Wasserbadkühlung tropft man über einen Zeitraum von 1 h eine Lösung von 30,00 g (0,041 mol) (NP[O-C₆H₃{OCH₃}C₃H₅]Cl)₃ in 70 ml wasserfreiem Tetrahydrofuran zu. Man rührt 3 h bei Raumtemperatur und erwärmt dann auf 50 °C Innentemperatur. Nach 40 h Rühren bei dieser Temperatur läßt man den braunen Kolbeninhalt auf Raumtemperatur abkühlen, überführt in einen Einhalskolben und rotiert das Lösungsmittel ab. Man nimmt mit 130 ml demineralisiertem Wasser und 130 ml Chloroform auf und trennt die Phasen im Scheidetrichter. Die wäßrige Phase wird nochmals mit 50 ml Chloroform geschüttelt. Die vereinigten organischen Phasen werden ihrerseits noch zweimal mit je 50 ml 5 %iger Kochsalzlösung gewaschen und anschließend über wasserfreiem Natriumsulfat getrocknet. Nach Filtrieren vom Trockenmittel, Abrotieren des Lösungsmittels und Trocknen im Hochvakuum erhält man 35,83 g (0.040 mol entsprechend 99 % der Theorie) einer pastösen, karamelfarbenen Verbindung.
Zur Reinigung rührt man mit Aktivkohle und filtriert über eine kurze Kieselgelsäule (Kieselgel 60). Aus dem Filtrat erhält man nach dem Abziehen des Lösungsmittels und Trocknung im Hochvakuum 28,37 g (0,032 mol entsprechend 78 % der Theorie) schwach gefärbtes, pastöses Produkt.
Eigenschaften des Endproduktes:
Molmasse: 885,82 g/mol

| Elementaranalyse | C % | H % | N % | O % | Cl % | P% |
|---|---|---|---|---|---|---|
| berechnet | 56,95 | 6,14 | 4,74 | 21,67 | 0.00 | 10,49 |
| gefunden | 57,41 | 6,33 | 4,68 | | 0,00 | 11,00 |

Beilsteinprobe auf Halogen negativ; dünnschichtchromatographische Untersuchung: Laufmittelsystem n-Heptan zu Ethylacetat 1 : 1; Material Kieselgel mit UV-Indikator Fa. Roth Rf = 0,47; Detektion: UV 254 nm, Indikator Methylrot, Jod.

### Beispiel 7

### 2,2,4,4,6,6-Hexakis-(styroloxy)-2,2,4,4,6,6-hexahydro-1,3,5,2,4,6-triazatriphosphorin

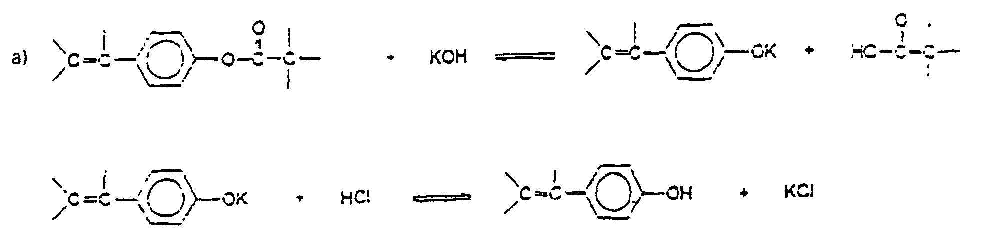

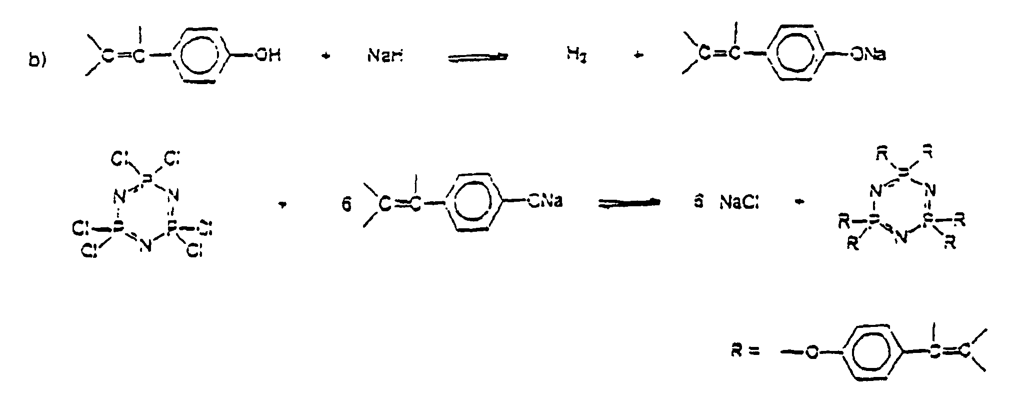

a) In einem 500 ml-Dreihalskolben mit Innenthermometer legt man 38,88 g (0,24 mol) p-Acetoxystyrol vor und gibt unter Rühren und Kühlung mit einem Wasserbad innerhalb 2 min 400 ml einer 10 %igen Kalilauge zu. Der Kolbeninhalt verfärbt sich gelb, es bilden sich zwei Phasen, und die Innentemperatur steigt leicht an. Man rührt zunächst noch 2 h unter Wasserbadkühlung und anschließend bei Raumtemperatur über Nacht (ca. 15 h).
Am nächsten Tag ist der Kolbeninhalt orange gefärbt und besteht nur noch aus einer Phase. Man neutralisiert mit ca. 175 ml einer 3N Salzsäure (pH-Kontrolle). Dabei fällt das Produkt voluminös aus. Man saugt ab und wäscht mit etwas n-Heptan nach. Zur Bestimmung der Rohausbeute wird das Rohprodukt an der Ölpumpe getrocknet.
Rohausbeute: 24,84 g (0,207 mol entsprechend 86 % der Theorie) leicht rosa gefärbtes Pulver. Man löst in 200 ml Chloroform und schüttelt zweimal gegen je 50 ml demineralisiertes Wasser. Die organische Phase wird über wasserfreiem Natriumsulfat getrocknet und nach dem Abfiltrieren des Trockenmittels 10 min mit Aktivkohle gerührt. Man filtriert abermals und zieht das Lösungsmittel im Rotationsverdampfer ab.
Rohausbeute: 18,11 g (0,151 mol entsprechend 63 % der Theorie) weißes Pulver. Man kristallisiert zur weiteren Reinigung aus einem Gemisch von 100 ml Chloroform und 50 ml n-Heptan um (im Kühlschrank bilden sich beim Stehen alsbald weiße Kristalle). Ausbeute nach Absaugen und Trocknen: 12,84 g (0,107 mol entsprechend 54 % der Theorie) weißes Pulver. Das hergestellte p-Hydroxystyrol sollte rasch weiterverarbeitet werden, da es sich bei längerer Lagerung verfärben kann.
Eigenschaften des p-Hydroxystyrols:
weißer Feststoff; Schmelzpunkt: 68 bis 70 °C;

| Elementaranalyse | C % | H % | O % |
|---|---|---|---|
| berechnet | 79,97 | 6,71 | 13,32 |
| gefunden | 79,73 | 6,66 | |

Molmasse: 120,15 g/mol gut löslich in Aceton, Tetrahydrofuran, Ethanol, Diethylether; schlecht löslich in n-Heptan, Wasser; dünnschichtchromatographische Untersuchung: Laufmittelsystem n-Heptan zu Ethylacetat 1 : 1; Material Kieselgel mit UV-Indikator Fa. Roth Rf = 0,50; Detektion: UV 254 nm, Indikator Methylrot, Jod.
b) In einem 500 ml-Dreihalskolben suspendiert man 2,08 g (0,087 mol) NaH in 130 ml wasserfreiem Tetrahydrofuran und rührt 5 min bei Raumtemperatur. Anschließend tropft man innerhalb 30 min eine Lösung aus 12,84 g p-Hydroxystyrol und 0,01 g Schwefel (Inhibitor) in 100 ml wasserfreiem Tetrahydrofuran zu (Gasentwicklung, Erhöhung der Innentemperatur auf 30 °C, der Kolbeninhalt verfärbt sich alsbald braun).
Man rührt noch 30 min bei Raumtemperatur, dann ist die Alkoholatbildung vollständig abgelaufen (keine Gasentwicklung mehr, klare braune Lösung). Anschließend tropft man über einen Zeitraum von 15 min eine Lösung aus 3,77 g (0,011 mol, aus n-Heptan umkristallisiert) (NPCl₂)₃ in 40 ml wasserfreiem Tetrahydrofuran zu (leichte Erhöhung der Innentemperatur). Nach vollendeter Zugabe rührt man noch 1 h bei Raumtemperatur und erwärmt dann auf 60 °C Innentemperatur [alsbald Niederschlagsbildung (NaCl)]. Bei dieser Temperatur rührt man über Nacht (insgesamt 15 h).
Man läßt auf Raumtemperatur kommen und überführt den Kolbeninhalt mit wenig Tetrahydrofuran in einen 1 l-Rundkolben. Man rotiert einen Großteil des Lösungsmittels ab und überführt das Rohprodukt mittels 100 ml Diethylether und 100 ml demineralisiertem Wasser in einen Scheidetrichter. Man trennt die Phasen und schüttelt die braune wäßrige Phase noch zweimal mit je 50 ml Diethylether. Die vereinigten Etherphasen (orangegelb) werden nacheinander gegen je 30 ml einer 2N Salzsäure, einer 5 %igen Sodalösung und einer 5 %igen Kochsalzlösung geschüttelt und anschließend über wasserfreiem Natriumsulfat getrocknet. Man filtriert, rührt 10 min mit Aktivkohle, filtriert abermals und rotiert den Ether ab.
Rohausbeute: 11,90 g (0,014 mol entsprechend >100 % der Theorie, noch verunreinigt) beiges Pulver.
Zur weiteren Reinigung kristallisiert man aus 50 ml Isopropanol um. Endausbeute: 7,90 g (0,009 mol entsprechend 85 % der Theorie) weißes Pulver
Eigenschaften:
weißer Feststoff; Schmelzpunkt: 99 bis 100 °C; thermisches Verhalten: über 120 °C allmähliche Polymerisation.

| Elementaranalyse | C % | H% | N % | O % | Cl % | P% |
|---|---|---|---|---|---|---|
| berechnet | 67,84 | 4,98 | 4,94 | 11,30 | 0,00 | 10,93 |
| gefunden | 67,88 | 5,12 | 4,82 | | 0,00 | 10,76 |

Molmasse: 849,89 g/mol gut löslich in Tetrahydrofuran, Dichlormethan, Diethylether, Toluol, Aceton; schlecht löslich in Wassser, n-Heptan; dünnschichtchromatographische Untersuchung: Laufmittelsystem n-Heptan zu Ethylacetat 1 : 1; Material Kieselgel mit UV-Indikator Fa. Roth Rf = 0,63; Detektion: UV 254 nm, Indikator Methylrot, Jod; Beilsteinprobe auf Halogene negativ.

## Patentansprüche

1. Polymerisierbares Phosphazenderivat mit einem Grundgerüst der allgemeinen Formel
- [NP(Z-Q-O-(C₆H₄)_{y}-CR'=CHR'')ₐ(Z'-YH)_{b}]ₓ- (1)
worin Z und Z' gleich oder verschieden sind und jeweils -O-, -S-, -NH- oder -NR- (R = C₁-C₆-Alkyl) bedeuten, Q eine gegebenenfalls O, S und/oder N enthaltende aliphatische, cycloaliphatische, aromatische und/oder heterocyclische Kohlenwasserstoffgruppe bedeutet, R' und/oder R'' Wasserstoff oder C₁-C₁₀-Alkyl bedeuten, YH eine gegebenenfalls O, S und/oder N und/oder gegebenenfalls eine von einer Vinylethergruppe oder Styrolethergruppe verschiedene reaktive Gruppe enthaltende aliphatische, cycloaliphatische, aromatische und/oder heterocyclische Kohlenwasserstoffgruppe bedeutet, y 0 oder 1 ist, x eine ganze Zahl von 2 bis 20 bedeutet und a eine Zahl größer als 0 ist, b=0 oder eine Zahl größer als Null ist, wobei a + b = 2 ist.

2. Phosphazenderivat nach Anspruch 1,
**dadurch gekennzeichnet,**
**dass** in der Formel (1) die offenen Bindungen zu einem Phosphazenring zusammengefügt sind und x = 3 oder 4 ist.

3. Phosphazenderivat nach einem der vorhergehenden Ansprüche,
**dadurch gekennzeichnet,**
**dass** y = 0 ist.

4. Phosphazenderivat nach einem der vorhergehenden Ansprüche,
**dadurch gekennzeichnet,**
**dass** Z und Z' Sauerstoff bedeuten.

5. Phosphazenderivat nach einem der vorhergehenden Ansprüche,
**dadurch gekennzeichnet,**
**dass** Q und Y Alkylen, Biphenylen-, Phenylen- oder Oxyalkylengruppen bedeuten, die gegebenenfalls Estergruppen, Urethangruppen, OH-Gruppen, NH₂-Gruppen und/oder Ketogruppen enthalten.

6. Phosphazenderivat nach Anspruch 5,
**dadurch gekennzeichnet,**
**dass** Q eine C₁-C₆-Alkylengruppe oder eine C₂-C₁₂-Oxyalkylengruppe bedeutet.

7. Phosphazenderivat nach einem der vorhergehenden Ansprüche,
**dadurch gekennzeichnet,**
**dass** Y eine Isocyanatgruppe, Carboxylgruppe, Allylgruppe, Vinylacetatgruppe, N-Methylolgruppe, Epoxidgruppe, Glycidylethergruppe, Acrylatgruppe, Methacrylatgruppe, Silylgruppe, OH-Gruppe oder NH₂-Gruppe enthält.

8. Phosphazenderivat nach einem der vorhergehenden Ansprüche,
**dadurch gekennzeichnet,**
**dass** die Gruppe (Z'-YH) reaktiv, aber nicht polymerisierbar ist.

9. Verfahren zur Herstellung von Phosphazenderivaten nach einem der Ansprüche 1 bis 8,
**dadurch gekennzeichnet,**
**dass** man ein Chlorphosphazen mit wenigstens einer Verbindung der allgemeinen Formel M-Z-Q-O-(C₆H₄)_{y}-CR'=CHR'' (2) alleine oder in Kombination mit wenigstens einer Verbindung der allgemeinen Formel M-Z'-YH (3) oder nacheinander mit M-Z-Q-O-(C₆H₄)_{y}-CR'=CHR'' (2) und M-Z'-YH (3) in einem inerten Lösemittel umsetzt, wobei M ein Wasserstoffatom, Alkalimetall, Erdalkalimetall oder einen Basenrest bedeutet und Z, Z', Q, Y, R', R'' und y wie für (1) definiert sind.

10. Verfahren nach Anspruch 9,
**dadurch gekennzeichnet,**
**dass** man Verbindungen (2) und (3) verwendet, in denen M Natrium bedeutet und die durch Umsetzen von Verbindungen H-Z-Q-O-(C₆H₄)_{y}-CR'=CHR'' bzw. H-Z'-YH mit Natriumhydrid, Natrium oder Natriumhydroxid erhalten werden.

11. Verfahren nach Anspruch 9,
**dadurch gekennzeichnet,**
**dass** man Verbindungen verwendet, in denen M den Pyridylrest oder einen Tertiäraminorest bedeutet.

12. Verwendung eines Phosphazenderivats nach einem der Ansprüche 1 bis 8 als aushärtbares Bindemittel für Lacke, Beschichtungsmittel, Füllmittel, Spachtelmassen, Klebstoffe, Formteile oder Folien.

13. Verwendung eines Phosphazenderivats mit einer Vinylethergruppe nach Anspruch 12 unter kationischem Starten der Aushärtung mit Hilfe wenigstens einer Säure.

## Claims

1. Polymerisable phosphazene derivative with a basic structure having the general formula
-[NP(Z-Q-O-(C₆H₄)_{y}-CR'=CHR`')ₐ(Z'YH)_{b}]ₓ- (1)
in which Z and Z' are the same or different and stand respectively for -O-, -S-, -NH- or -NR- (R = C₁C₆ alkyl), Q is a an aliphatic, cycloaliphatic, aromatic and/or heterocyclic hydrocarbon group optionally containing O, S and/or N, R' and/or R'` stand for hydrogen or C₁-C₁₀ alkyl, YH is an aliphatic, cycloaliphatic, aromatic and/or heterocyclic hydrocarbon group optionally containing O, S and/or N and/or optionally a different reactive group from a vinyl ether group or styrene ether group, y is 0 or 1, x is a whole number from 2 to 20 and a is a number higher than 0, b=0 or a number higher than nought where a + b = 2.

2. Phosphazene derivative as claimed in claim 1,
**characterised in that**
the open bonds in formula (1) are joined to a phosphazene ring and x = 3 or 4.

3. Phosphazene derivative as claimed in one of the preceding claims,
**characterised in that**
y = 0.

4. Phosphazene derivative as claimed in one of the preceding claims,
**characterised in that**
Z and Z' stand for oxygen.

5. Phosphazene derivative as claimed in one of the preceding claims,
**characterised in that**
Q and Y stand for alkylene, biphenylene, phenylene or oxyalkylene groups, optionally containing ester groups, urethane groups, OH groups, NH₂ groups and/or keto groups.

6. Phosphazene derivative as claimed in one of the preceding claims,
**characterised in that**
Q stands for a C₁-C₆ alkylene group of a C₂-C₁₂ oxyalkylene group.

7. Phosphazene derivative as claimed in one of the preceding claims,
**characterised in that**
Y contains an isocyanate group, carboxyl group, allyl group, vinyl acetate group, N-methylol group, epoxide group, glycidyl ether group, acrylate group, methacrylate group, silyl group, OH group or NH₂ group.

8. Phosphazene derivative as claimed in one of the preceding claims,
**characterised in that**
the group (Z'-YH) is reactive but not polymerisable.

9. Method of producing phosphazene derivatives as claimed in one of claims 1 to 8,
**characterised in that**
a chlorophosphazene is caused to react with at least one compound having the general formula M-Z-Q-O-(C₆H₄)_{y}-Cr'=CHR'' (2), alone or in combination with at least one compound having the general formula M-Z'-YH (3) or successively with M-Z-Q-O-(C₆H₄)_{y}-Cr'=CHR'' (2) and M-Z'-YH (3) in an inert solvent, where M is a hydrogen atom, alkali metal, earth alkali metal or a basic residue and Z, Z', Q, R', R'' and y are as defined in respect of (1).

10. Method as claimed in claim 9,
**characterised in that**
compounds (2) nd (3) are used in which M stands for sodium and are obtained by reacting compounds H-Z-Q-O-(C₆H₄)_{y}-CR'=CHR' and H-Z'-YH with sodium hydride, sodium or sodium hydroxide.

11. Method as claimed in claim 9,
**characterised in that**
compounds are used in which M stands for the pyridyl residue or a tertiary amino residue.

12. Use of a phosphazene derivative as claimed in one of claims 1 to 8, as a curable binder for paints, coatings, filles, mastics, adhesives, mouldings or films.

13. Use of a phosphazene derivatives with a vinyl ether group as claimed in claim 12 with cationic initiation of curing by means of at least one acid.

## Revendications

1. Dérivé de phosphazène polymérisable ayant un squelette de base de formule générale suivante :
-[NP(Z-Q-O-(C₆H₄)_{y}-CR'=CHR")ₐ(Z'-YH)_{b}]ₓ- (1)
dans laquelle Z et Z'sont identiques ou différents et désignent respectivement -O-, -S-, -NH- ou -NR- (R = alkyle en C₁-C₆), Q' désigne un groupe d'hydrocarbures aliphatique, cycloaliphatique, aromatique et/ou hétérocyclique, contenant, le cas échéant, O, S et/ou N, R' et/ou R" désignent l'hydrogène ou un alkyle en C₁-C₁₀, YH désigne un groupe d'hydrocarbures aliphatique, cycloaliphatique, aromatique et/ou hétérocyclique, contenant, le cas échéant, O, S et/ou N et/ou, le cas échéant, un groupe réactif différent d'un groupe éther vinylique ou d'un groupe éther styrolènique, y est 0 ou 1, x désigne un nombre entier de 2 à 20 et a est un nombre supérieur à 0, b = 0 ou est un nombre supérieur à 0, moyennant quoi a + b = 2.

2. Dérivé de phosphazène selon la revendication 1, **caractérisé en ce que**, dans la formule (1), les liaisons ouvertes sont combinées pour former un cycle phosphazène et **en ce que** x = 3 ou 4.

3. Dérivé de phosphazène selon l'une quelconque des revendications précédentes, **caractérisé en ce que** y = 0.

4. Dérivé de phosphazène selon l'une quelconque des revendications précédentes, **caractérisé en ce que** Z et Z' désignent l'oxygène.

5. Dérivé de phosphazène selon l'une quelconque des revendications précédentes, **caractérisé en ce que** Q et Y désignent les groupes alkylène, biphénylène, phénylène ou oxyalkylène, qui contiennent, le cas échéant, des groupes ester, des groupes uréthanne, des groupes OH, des groupes NH₂, et/ou des groupes cétone.

6. Dérivé de phosphazène selon la revendication 6, **caractérisé en ce que** Q désigne un groupe alkylène en C₁-C₆ ou un groupe oxyalkylène en C₂-C₁₂.

7. Dérivé de phosphazène selon l'une quelconque des revendications précédentes, **caractérisé en ce que** Y contient un groupe isocyanate, un groupe carboxyle, un groupe allyle, un groupe acétate de vinyle, un groupe N-méthylol, un groupe époxyde, un groupe éther glycidylique, un groupe acrylate, un groupe méthacrylate, un groupe silyle, un groupe OH ou un groupe NH₂.

8. Dérivé de phosphazène selon l'une quelconque des revendications précédentes, **caractérisé en ce que** le groupe (Z'-YH) est réactif, mais n'est pas polymérisable.

9. Procédé de préparation de dérivés de phosphazène selon l'une quelconque des revendications 1 à 8, **caractérisé en ce que** l'on fait réagir, dans un solvant inerte, un chlorophosphazène avec au moins un composé de la formule générale M-Z-Q-O-(C₆H₄)_{y}-CR'=CHR" (2), à lui seul ou en combinaison, avec au moins un composé de la formule générale M-Z'-YH (3) ou, l'un après l'autre, avec M-Z-Q-O-(C₆H₄)_{y}-CR'=CHR" (2) et M-Z'-YH (3), M désignant un atome d'hydrogène, un métal alcalin, un métal alcalino-terreux ou un résidu de base et Z, Z', Q, Y, R', R" ainsi que y étant définis comme pour (1).

10. Procédé selon la revendication 9, **caractérisé en ce que** l'on utilise des composés (2) et (3), dans lesquels M désigne le sodium et qui sont obtenus par réaction des composés H-Z-Q-O-(C₆H₄)_{y}-CR'=CHR" ou H-Z'-YH avec l'hybride de sodium, le sodium ou avec l'hydroxyde de sodium.

11. Procédé selon la revendication 9, **caractérisé en ce que** l'on utilise des composés dans lesquels M désigne le résidu pyridyle ou un résidu amine tertiaire.

12. Utilisation d'un dérivé de phosphazène selon l'une quelconque des revendications 1 à 8, en tant que liant pouvant être durci pour des vernis, agents de revêtement, charges, mastics, adhésifs, pièces moulées ou feuilles.

13. Utilisation d'un dérivé de phosphazène ayant un groupe éther vinylique selon la revendication 12, sous amorçage cationique du durcissement avec l'aide d'au moins un acide.
